Europäisches Patentamt

European Patent Office

Office européen des brevets

(11) Publication number: **0 146 510**
**A1**

## (12) EUROPEAN PATENT APPLICATION

(21) Application number: **84850302.5**

(22) Date of filing: **12.10.84**

(51) Int. Cl.⁴: **A 23 P 1/14**

(30) Priority: **09.11.83 SE 8306164**

(43) Date of publication of application: **26.06.85**
**Bulletin 85/26**

(84) Designated Contracting States: **AT BE CH DE FR GB IT LI NL**

(71) Applicant: **AGA AKTIEBOLAG, S-18181 Lidingö (SE)**

(72) Inventor: **Thulin, Sigvard, Sippvägen 3, S-18363 Täby (SE)**

(74) Representative: **Dalbark, Sigvard, AGA AB Patent Department, S-181 81 Lidingö (SE)**

(54) **Method of extrusion.**

(57) In a method of extrusion for the production of porous foodstuffs the primary product is compressed at a rising temperature and forced through a nozzle, and the extruded product is subsequently allowed to expand and cool off. In order to prevent the admission of air to the process and thereby to avoid oxidation and other disadvantageous influence on the product at least the expansion and cooling are carried out in an atmosphere of protective gas, preferably an inert gas such as nitrogen or carbon dioxide.

ACTORUM AG

## Method of extrusion

The present invention relates to a method of extrusion, especially for the production of porous food-stuffs, wherein the primary produce is compressed at a rising temperature and forced through a nozzle, and the extruded product is subsequently allowed to expand and cool off.

Extrusion methods of this kind are used in the production of certain types of food-stuff, such as so-called snacks, crisp bread and the like.

The compression results in an automatic rise of temperature, often to temperatures above $100^{\circ}C$. After having passed through the nozzle the product is subjected to a rapid pressure drop to atmospheric pressure. The product then expands heavily due to the expansion of gases enclosed therin, principally water vapour. When the hot and porous product subsequently cooles off atmospheric air enters into all the pores and cavities thereof. This has appeared to have a negative effect on the product in that the quality and durability thereof is deteriorated.

The porous product has a very large contact area and the air flowing into it is disadventageous in two respects. Firstly, the product is oxidated by the oxygen of the air, and secondly it is subjected to the influence of micro-organisms and other possible contaminations present in the air.

The object of the present invention is to eliminate the above-mentioned disadvantages of the previously applied technique and to provide a method which makes it possible to improve the quality and durability of extruded food-stuffs. This has been obtained by a method of extrusion of the kind mentioned in the introduction which according to the invention i generally characterized in that at least the expansion and cooling are performed in a protective gas atmosphere.

By performing the extrusion process in a protective gas atmosphere the accessibility of air to the product is effectively prevented and the risk of oxidation or other harmful influence has consequently been eliminated.

The protective gas used is an inert gas suitable for the purpose, such as nitrogen or carbon dioxide.

The process or at least a portion thereof is preferably preformed in a closed room in which a suitable protective gas atmosphere is maintained by supply of inert gas. The charging of the primary produce into this room and the discharging of the product therefrom takes place via sluice arrangements or the like of a known kind. Principally, the cooling chamber should be kept at a protective gas atmosphere, but if considered appropriate the rest of the process could also be carried out in such atmosphere. Thus, the admixture of air into the product can be prevented by performing the compression upstream of the nozzle in a protective atmosphere.

In an embodiment of the invention cold inert gas is supplied to the cooling chamber. In addition to the above described advantageous influence on the quality and durability a more rapid cooling of the product is also obtained thereby which is preferable e. g. in such case when it contains temperature sensitive components, such as vitamins.

In another embodiment of the invention the entire process is carried out in a continuous protective gas atmosphere, that is from the compression and charging of the primary produce to the nozzle and up to and including the packaging of the final product in sealed packages. In such case the extrusion equipment is connected directly to a packaging equipment in order to maintain the continuous protective atmosphere.

The method according to the invention also makes it possible to add other components to the inert gas which are advantageous to the product, such as to prevent attacks by bacteria or mould fungus.

## Claims

1. Method of extrusion, especially for the production of porous food-stuffs, wherein the primary produce is compressed at a rising temperature and forced through a nozzle, and the extruded product is subsequently allowed to expand and cool off, c h a r a c t e r i z e d in that at least the expansion and cooling are performed in a protective gas atmosphere.

2. Method according to claim 1, c h a r a c t e r i z e d in that the expansion and cooling take place in a low temperature protective atmosphere whereby a rapid cooling of the extruded product is obtained.

3. Method according to claim 1, c h a r a c t e r i z e d in that the compression and feeding of the primary produce to the nozzle as well as the expansion and cooling of the extruded product are performed in protective atmosphere.

4. Method according to claim 3, c h a r a c t e r i z e d in that the entire process is carried out in a continuous protective atmosphere, from the compression and charging of the primary produce to the nozzle and up to and including the packaging of the final product in sealed packages by means of a packaging equipment connected directly to the extrusion equipment.

5. Method according to any of claims 1 - 4, c h a r a c t e - r i z e d in that the protective gas comprises an inert gas, preferably nitrogen or carbon dioxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 049 848 (ARCHER DANIELS MIDLAND) <br> * Claim 1; column 2, lines 16-57 * | 1,5 | A 23 P 1/14 |
| Y | | 3,4,5 | |
| Y | FR-A- 609 630 (ANDERSON PUFFED RICE COMPANY) <br> * Abstracts 1,2; page 3, lines 38-48; examples V-VI * | 3,5 | |
| Y | US-A-2 816 837 (H. HOLSMANN) <br> * Claim 1; column 4, lines 66-70; figures 1,9 * | 4 | |
| | | | TECHNICAL FIELDS SEARCHED (Int. Cl.4) |
| A | GB-A-1 393 822 (GENERAL MILLS) <br> * Claim 1; column 2, lines 5-13 * | 1,6 | A 23 P <br> A 23 L <br> A 23 J |
| A | US-A-3 800 053 (D. LANGE) <br> * Claim 1; column 3, lines 33-34 * | 1,2,5 | |
| A | GB-A-2 004 174 (MEGGLE MILCH INDUSTRIE) <br> * Claim 1; column 2, lines 19-28 * | 1 | |

The present search report has been drawn up for all claims

| Place of search | Date of completion of the search | Examiner |
|---|---|---|
| THE HAGUE | 15-02-1985 | DESMEDT G.R.A. |